# EUROPEAN PATENT SPECIFICATION

(11) **EP 4 303 784 B1**
(45) Date of publication and mention of the grant of the patent: **10.09.2025**
(21) Application number: 22183605.9
(22) Date of filing: 07.07.2022
(51) Int. Cl.: G06Q 10/04, G06Q 10/08, G06Q 10/00, G06Q 10/30, G06Q 10/047, G06Q 10/083

(54) **BALANCED TRANSPORT CYCLES IN MASS EXCAVATION OPERATIONS**
AUSGEGLICHENE TRANSPORTZYKLEN BEI MASSENAUSHUBARBEITEN
CYCLES DE TRANSPORT ÉQUILIBRÉS DANS DES OPÉRATIONS D'EXCAVATION DE MASSE

(43) Date of publication of application: 10.01.2024
(73) Proprietor: VOLVO TRUCK CORPORATION, 405 08 Göteborg (SE)
(72) Inventor: SOHLBERG, Per, 436 52 Hovås (SE); SJÖSTRÖM, Lars-Ola, 722 23 Västerås (SE)
(74) Representative: Kransell & Wennborg KB

(56) References cited:
- GB-A- 2 569 320
- US-A1- 2010 216 498
- US-A1- 2021 087 031
- US-A1- 2021 287 459

## Description

### Technical field

The present disclosure relates to the field of automated fleet management. In particular, the present disclosure relates to automated balancing of transport cycles in mass excavation operations.

### Background

Operations such as digging or blasting at a construction site often generate large amounts of waste material (such as dirt, rock, or similar) that need to be removed from the construction site and taken care of elsewhere, e.g. at a landfill, crusher or other dump site. The planning of such mass excavation operations is thus often a large part a construction project, and require proper scheduling and schedulefollowing in order to avoid unnecessary delays.

Mass excavation is often performed using various transport cycles, wherein dump trucks are scheduled to pick up material such as rock, dirt or similar at a construction (or load) site, and to deliver the material to a dump site where the material can be sorted and properly handled. After having made a delivery to the dump site, a truck may return back to the load site to pick up another load of material, thereby completing the transport cycle. In order to avoid driving back empty from the dump site, the dump truck can also be scheduled to e.g., on its way back to a main load site, stop at one or more other load sites to pick up construction material needed at the main load site. For example, an outbound journey from the main load site may include transporting blasted stone or rock to a dump site, while an inbound journey to the main load site may include picking up and returning materials such as gravel, concrete, or similar, from one or more additional load sites.

For larger and more complex construction projects, the number of dump trucks required to perform such mass excavation operations may become large, and the task of maintaining a constant flow of material from and to a main load site may quickly become overwhelming. If too many dump trucks simultaneously arrive at a same dump site, a limited capacity for material handling at the dump site may cause one or more of the dump trucks having to queue before being able to unload their transported material. Likewise, a limited capacity at the main load site may quickly cause a buildup of inbound dump trucks queuing to deliver new material to the main load site, and similar. As a consequence, imbalance in inbound and outbound dump trucks to the main load site may become both costly and have unwanted environmental impact, as dump trucks queuing in line may e.g. not always be able to shut off their engines. To compensate for such unwanted variations, and to make sure that e.g. a load site always has at least one dump truck ready to be loaded, conventional strategies may include e.g. an intentional overcapacity in terms of a number of dump trucks used, which may be both expensive and have further environmentally negative effects.

Due to the complexity of the mass hauling operations and the various transport cycles involved, a person (such as a production manager or dispatcher) may often end up being reactive instead of proactive, and often have to resort to commanding drivers of the various dump trucks directly via voice radio, in an attempt to resolve an already ongoing imbalance at the main load site. In addition, human behavior, such as bunching of vehicles, may cause a plurality of dump trucks having left a particular site well separated and according to a predefined schedule to anyway arrive together at a next site, especially before e.g. lunch, coffee breaks or end-of-day when the drivers e.g. want to spend time together or leave for home as early as possible, resulting in unnecessary waiting time due to queue-buildups at the various sites of a transport cycle.

Prior art document US2010/216498A1 discloses monitoring and controlling a fleet of dump trucks on a worksite.

### Summary

To at least partially alleviate the above-identified issues in mass hauling operations, the present disclosure provides an improved method of (automated) transport cycle balancing, as well as a corresponding monitoring device, dump truck, material handling fleet, computer program and computer program product as defined in the accompanying independent claims. Various embodiments of the improved method, monitoring device, dump truck, material handling fleet, and computer program/computer program product are defined by the accompanying dependent claims.

According to a first aspect of the present disclosure, a method is provided. The method is a method of (automated) transport cycle balancing and is performed in processing circuitry of a monitoring device. The monitoring device may for example for part of a fleet management system or similar. The method includes recurrently receiving first data indicative of movements of a plurality of dump trucks each operating in accordance with a transport cycle, where each transport cycle includes a planned hauling of material between a same first site (i.e. there is a same main load/unload site for all of the plurality of dump trucks) and at least one second site (which may be same or different for the various dump trucks depending on their respective transport cycles). The method further includes forecasting, based on the received first data, an imminent imbalance of inbound and outbound dump trucks for the first site. The method further includes determining, in response to forecasting the imminent imbalance, a mitigative action for at least a first dump truck of the plurality of dump trucks, in order to reduce of the imminent imbalance (actually) occurring. The method further includes communicating the mitigative action to the first dump truck.

As used herein, and as will be explained in more detail later herein, a "mitigative" action may e.g. be a command that a vehicle (or a driver thereof) must follow in order to avoid that the imbalance becomes a reality. For example, in some embodiments of the method, such an action may include e.g. to i) reduce a speed of the first dump truck, ii) increase a speed of the first dump truck, iii) temporarily stopping the first dump truck, and/or to change a planned route for the first dump truck. That the first data is received recurrently means that as the various dump trucks move around, updated information about their position and e.g. speed are fed to the monitoring device, such that e.g. the forecasting may be performed taking the updated information into account.

The solution of the present disclosure, as defined e.g. in the above method, improves upon currently available technology in that it allows to automate the task of keeping track of all dump trucks, and in particularly in that it uses the movements of the various dump trucks to forecast an imminent imbalance before the imbalance needing to actually occur. By determining the mitigative action before the imbalance has occurred, the imbalance may be avoided by the first dump truck (or e.g. the driver thereof) acting in accordance with the mitigative action. This thus removes or at least reduces the need for e.g. a dispatcher having to manually instruct each dump truck to take action, and in particular removes or at least reduces the need for actions as a response to an already occurring imbalance. By proactively forecasting the imminent imbalance, instead of first detecting and then reactively responding to an already ongoing imbalance, actions may instead be taken proactively to avoid the imbalance, which can help to reduce both environmental pollution (as the avoidance of queues makes the use of fuel for the dump trucks more efficient and of course also increases the overall production rates). As the mitigative action (or a set of mitigative actions) can be sent only to those dump trucks whose actions are considered most relevant for avoiding the imbalance, the other dump trucks (and the drivers thereof, if present) may continue their operations as normal without being disturbed by e.g. voice commands over radio intended for one or more other dump trucks (which is otherwise often the case when a dispatcher manager manually commands the dump trucks, as multiple dump trucks often share a same radio frequency). As used herein, that a particular truck (or the actions thereof) is relevant for avoiding an imbalance may e.g. include that the particular truck, if not taking further action, is likely to arrive too early to the first site, i.e. such that there will be no available capacity for either loading or unloading the particular truck once it arrives, or similar. Depending on the situation, it may also be such that all trucks (and their actions) are considered relevant for avoiding the imminent imbalance, in which case mitigative actions may be determined for, an communicated to, all trucks. In other envisaged situations, it may e.g. be only trucks involved in driving a same, particular transport cycle (i.e. between the same sites) whose actions are relevant to avoid the imminent imbalance, in which case mitigative actions may be determined for, and communicated to, only these trucks, etc.

In some embodiments of the method, communicating the mitigative action to the first dump truck may include sending a signal indicative of the mitigative action to a user device associated with a driver of the first dump truck. This may be advantageous as the driver may already have a suitable such user device, such as e.g. a phone, smartphone, tablet, or similar, available. The mitigative action may for example be communicated as a text message to the driver via the user device, or similar.

In some embodiments of the method, receiving the first data may include receiving, from the user device, a signal indicative of movements of the user device. The user device (such as e.g. a smartphone or tablet) may already be equipped with positioning equipment, such as e.g. a GPS or GNSS receiver, and such equipment may be used to provide the position and/or speed of a vehicle without having to install additional equipment to the vehicle. This because the user device, is e.g. kept within a cabin of the dump truck while driving, will have a substantially similar position, speed and e.g. acceleration as the dump truck itself.

In some embodiments of the method, communicating the mitigative action to the first dump truck may include sending a signal indicative of the mitigative action to i) a display device of the first dump truck (such that the mitigative action may be seen by the driver of the first dump truck, and/or to ii) an autonomous or semi-autonomous driving control system of the first dump truck. With option ii), the dump truck may thus act in accordance with the mitigative action without e.g. a need for the driver to interfere. In particular, in case there is no driver of the first dump truck (i.e. the first dump truck is a self-driving dump truck), this may be particularly useful as the process of transport cycle balancing may then be fully automated without any required human intervention once properly set up. The display device may e.g. be a screen on an instrument cluster/board of the dump truck, or on some other display provided within e.g. a cabin of the dump truck and visible to the driver. In other embodiments, such visual information may e.g. be complemented, or even replaced, by for example one or more audio signals which the driver is trained to interpret correctly, or similar.

In some embodiments of the method, the first site may e.g. be a main load site/main construction site, and the at least one second site of the transport cycle of the first dump truck may include both e.g. a dump site and an additional load site. For example, the first dump truck may be scheduled to both unload old material (from the main load site) and to pick up new material (to be used at the main load site) in order to complete its transport cycle. With such more complex transport cycles available, the use of the envisaged solution may be particularly beneficial.

In some embodiments of the method, the forecasting of the imminent imbalance may be based also on e.g. weather and/or traffic information. The method may then further include obtaining second data including such weather and/or traffic information pertinent to at least the transport cycle of the first dump truck.

In some embodiments of the method, forecasting the imminent imbalance may include using a machine learning algorithm which have been trained to, based on the first data, perform such a forecasting. If the weather and/or traffic information is also provided, the machine learning algorithm may be trained to also take such weather and/or traffic information into account during its forecasting of the imminent imbalance.

According to a second aspect of the present disclosure, there is provided a monitoring device (for transport cycle balancing). The monitoring device includes processing circuitry which is configured to cause the monitoring device to: recurrently receive first data indicative of movements of a plurality of dump trucks each operating in accordance with a transport cycle, wherein each transport cycle includes a planned hauling of material between a same first site and at least one second site (120); forecast, based on the received first data, an imminent imbalance of inbound and outbound dump trucks for the first site; determine, in response to forecasting the imminent imbalance, a mitigative action for at least a first dump truck off the plurality of dump trucks to reduce a risk of the imminent imbalance occurring, and communicate the mitigative action to the first dump truck. The monitoring device may thus be configured to perform the steps of the method of the first aspect. In some embodiments, the monitoring device may e.g. form part of a cloud-based solution, and be or e.g. be included as part of a computer server or computer server cluster, or similar.

In some embodiments of the monitoring device, the processing circuitry may be further configured to cause the monitoring device to perform any embodiment of the method of the first aspect as disclosed and discussed herein.

According to a third aspect of the present disclosure, there is provided a dump truck. The dump truck includes a positioning device configured to recurrently track (i.e. receive information about, from e.g. a GPS, GNSS, or similar, satellite) a movement of the dump truck. The dump truck further includes a wireless transmitter configured to recurrently send information indicative of the movement of the dump truck to a monitoring device according to the second aspect (or any embodiment thereof disclosed and described herein), e.g. as part of the first data received by the monitoring device.

In some embodiment of the dump truck, the dump truck may further include a wireless receiver configured to receive a signal indicative of the mitigative action from the monitoring device. The dump truck may further include circuitry configured to i) display the mitigative action to a driver of the dump truck (if the circuitry is or includes e.g. a display), and/or ii) to control a driving of the dump truck in accordance with the mitigative action (if the dump truck is e.g. an autonomous or semi-autonomous vehicle/dump truck, and where the circuitry is e.g. a control system for such a vehicle).

According to a fourth aspect of the present disclosure, there is provided a fleet for material hauling (e.g. mass excavation operations). The fleet includes a plurality of dump trucks (e.g. according to the third aspect or any embodiment thereof disclosed and described herein), and a monitoring device (e.g. according to the second aspect or any embodiment thereof disclosed and described herein), such that the monitoring device is configured to balance the transport cycles of the plurality of dump trucks by providing one or more mitigative actions in accordance with the method of the first aspect (or any embodiments thereof disclosed and discussed herein).

According to a fifth aspect of the present disclosure, there is provided a computer program for transport cycle balancing. The computer program includes computer code that, when running on processing circuitry of a monitoring device (such as the device of the second aspect, or any embodiment thereof), causes the monitoring device to: recurrently receive first data indicative of movements of a plurality of dump trucks each operating in accordance with a transport cycle, wherein each transport cycle includes a planned hauling of material between a same first site and at least one second site (120); forecast, based on the received first data, an imminent imbalance of inbound and outbound dump trucks for the first site; determine, in response to forecasting the imminent imbalance, a mitigative action for at least a first dump truck off the plurality of dump trucks to reduce a risk of the imminent imbalance occurring, and communicate the mitigative action to the first dump truck. The computer code is thus such that it causes the monitoring device to perform the steps of the method of the first aspect.

In some embodiments of the computer program, the computer code may be such that it causes the monitoring device to perform any embodiment of the method of the first aspect as disclosed and described herein.

According to a sixth aspect of the present disclosure, a computer program product is provided. The computer program product includes the computer program of the fifth aspect, and a computer-readable storage medium on which the computer program is stored. In some embodiments of the computer program product, the storage medium may be non-transitory.

Other objects and advantages of the present disclosure will be apparent from the following detailed description, the drawings and the claims. Within the scope of the present disclosure, it is envisaged that all features and advantages described with reference to e.g. the method of the first aspect are relevant for, apply to, and may be used in combination with also any feature and advantage described with reference to the monitoring device of the second aspect, the dump truck of the third aspect, the fleet of the fourth aspect, the computer program of the fifth aspect, and the computer program product of the sixth aspect, and vice versa.

### Brief description of the drawings

Exemplifying embodiments will now be described below with reference to the accompanying drawings, in which:
Figures 1A to 1C schematically illustrate various example mass excavation scenarios in which the solution of the present disclosure is applicable;
Figure 2 schematically illustrates embodiments of a monitoring device according to the present disclosure;
Figure 3A schematically illustrates a flowchart of embodiments of a method according to the present disclosure;
Figure 3B schematically illustrates, in terms of functional blocks, a flow of information in embodiments of a monitoring device according to the present disclosure, when performing the method of Figure 3A;
Figure 4 schematically illustrates embodiments of a dump truck according to the present disclosure;
Figure 5 schematically illustrates embodiments of a fleet for material hauling according to the present disclosure, and
Figures 6A and 6B schematically illustrate various embodiments of a monitoring device (for transport cycle balancing) according to the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments. On some occasions a reference numeral "ABC" will be used to refer to all objects of a same class, while a reference numeral "ABCn" (where "n" is a lowercase letter) will be used to refer to a particular object of the same class.

### Detailed description

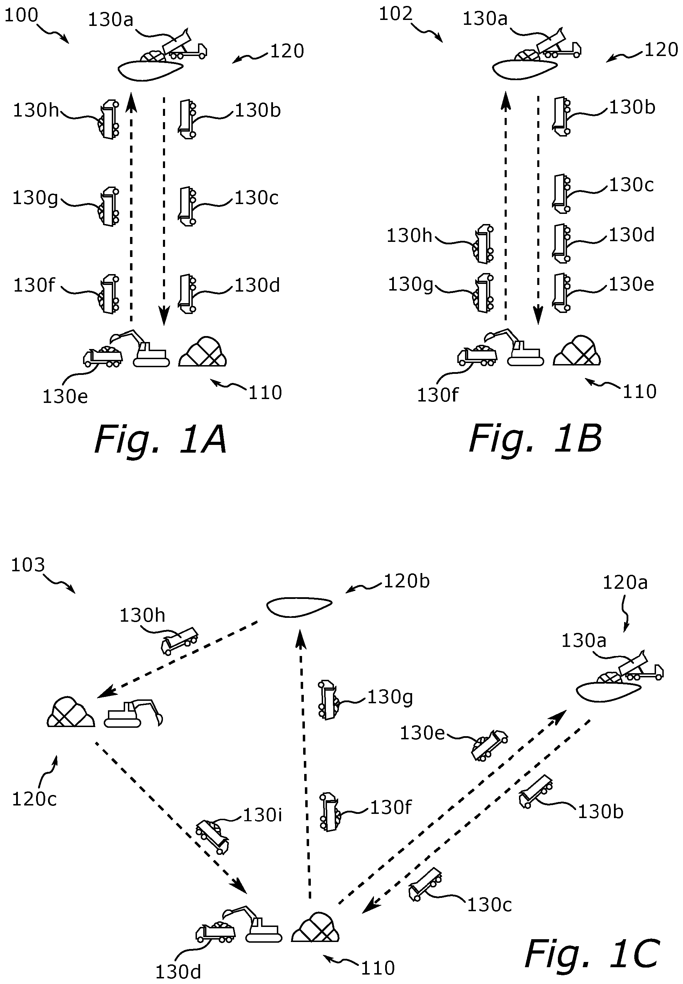

Various mass hauling scenarios in which the solutions of the present disclosure are applicable will now be described in more detail with reference to Figures 1A to 1C.

Figure 1A schematically illustrates a first scenario 100, in which multiple dump trucks 130a-h are involved in transporting mass from a main load site 110 to a dump site 120. The main load site 110 may for example be a construction site in which digging, or e.g. blasting or similar, produces quantities of waste material that needs to be removed from the construction site before further work may be done. Each dump truck 130a-h therefore performs a transport cycle, wherein the dump truck repeatedly picks up material at the main load site 110, drives to the dump site 120, dumps the material at the dump site 120 and then returns back (empty) to the main site 110 to pick up new waste material. In the scenario 100 depicted in Figure 1A, there is currently one dump truck 130e being loaded at the main load site 110, one dump truck 130a currently offloading at the dump site 120, three dump trucks 130b-d currently inbound to the main load site 110 (to pick up more material), and three dump trucks 130f-h currently outbound from the main load site 110 (and heading to the dump site 120 to unload material). As the number of inbound and outbound dump trucks for the main load site 110 are equal, there is a balance between inbound and outbound dump trucks for the main load site 110. It may of course be such that there is a different number of inbound and outbound dump trucks, which may still be a balanced situation as long as the handling capacity at the main load site 110 and/or the dump site 120, and the capacities in terms of speed and/or mass loading of the trucks 130, are such that queuing of the dump trucks to either pick up or deliver material is avoided. For example, having one inbound truck with a first loading capacity may be just as balanced as having two smaller trucks each having a loading capacity lower than the first loading capacity, or similar.

Figure 1B schematically illustrates a second scenario 101 for the setup of Figure 1A, but wherein there is currently only two dump trucks 130g and 130h outbound from the main load site 110, while there are four inbound dump trucks 130b-e. This may be the result of e.g. the handling capacity at the main load site 110 being too small, and/or e.g. by the drivers of the dump trucks having diverted from their planned schedule by e.g. driving too slow or too fast. As a result, there is an imbalance in the number of inbound and outbound dump trucks for the main load site 110, with a resulting queuing of at least the inbound dump trucks 130c-e while waiting for being supplied with new material at the main load site 110. The situation depicted in Figure 1B is not optimal from e.g. an environmental perspective, as the queuing dump trucks 130c-e may not always be able to e.g. shut off their engines while waiting. The situation depicted in Figure 1B is also not optimal from a productivity perspective, as there is a risk that the dump truck 130a currently unloading at the dump site 120 is finished well before any of the dump trucks 130g and 130h arrives at the dump site 120, leading to a potentially unused material handling capability at the dump site 120. In addition, once an imbalance such as depicted in Figure 1B has occurred, it may be hard or even impossible to end such a cycle, and a likely result may be that most or even all dump trucks 130a-h potentially end up queuing at a same site, with a substantial environmental and/or productive disadvantage resulting therefrom.

Figure 1C schematically illustrates a third scenario 103 which is more complex than the scenarios 100 and 101 depicted in Figures 1A and 1B, respectively. In the scenario 103, there are multiple sites in addition to the main load site 110, and the various dump trucks 130a-i operate according to multiple transport cycles. Currently, dump trucks 130a-e are operating according to a same transport cycle between the main load site 110 and a first dump site 120a, while the dump trucks 130f-i are operating according to another transport cycle between the main load site 110 and both of a second dump site 120b and an additional load site 120c. In the situation depicted in Figure 1C, there is currently no major imbalance in the number of dump trucks inbound to and outbound from the main load site 110, but due to the number of dump trucks involved and the multiple transport cycles, there is always a risk that such an imbalance will soon be imminent if the dump trucks 130a-i are left to drive based on their own judgements and according to their own wills. An imbalance may also be imminent if e.g. the handling capacity at the main load site 110 is smaller than an estimated rate of material arrival from the trucks 130b and 130c, etc., and similar. A dispatcher, or similar, responsible for directing the dump trucks 130a-i according to e.g. a predefined schedule and/or plan will thus likely be fully occupied only with telling commands over radio, with no or little other attention left for other things.

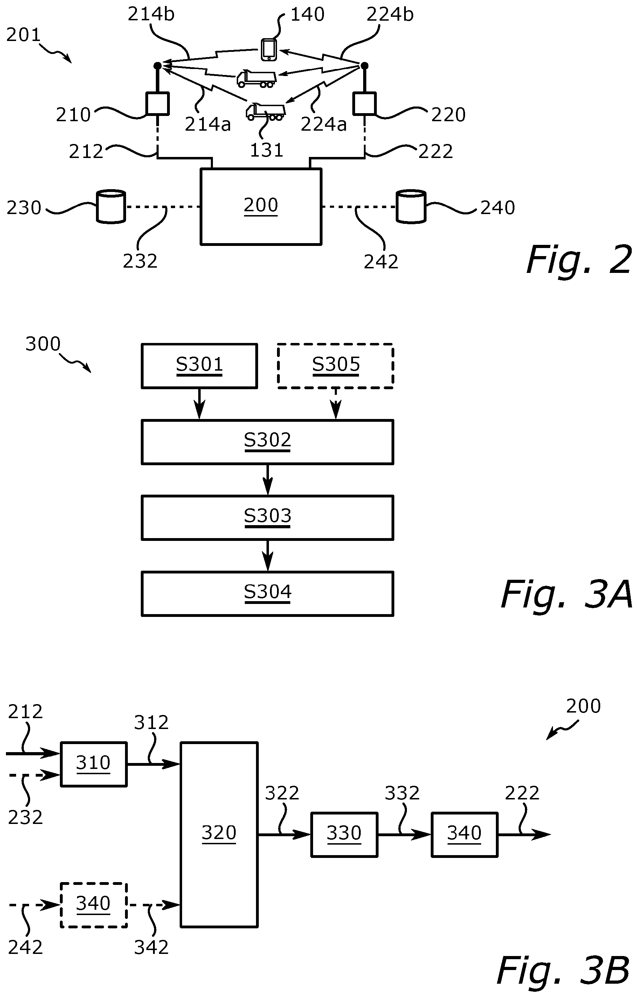

How the present disclosure and the solutions thereof envisages to alleviate the issues with, in particular, scenarios such as 101 and 102 will now be described with reference also to Figures 2, 3A and 3B.

Figure 2 schematically illustrates embodiments of a monitoring device 200 which forms part of a monitoring system 201 (which monitoring system 201 is also provided in the present disclosure). Hereinafter, the terms "monitoring device" and just "device" will be used interchangeably. This applies also to the terms "dump truck", "truck" and "vehicle", which will be used interchangeably as well.

The device 200 is communicatively connected, via e.g. a signal connection 212, to a receiver/antenna 210 which receives, as part of wireless (e.g. radio and/or optical) signals 214a and/or 214b, first data about the movements of a plurality of trucks, including at least a first truck 131. The first data may e.g. be received as part of the radio signal 214a provided from the first truck 131 itself, and/or e.g. as part of the radio signal 214b provided from a user device 140 associated with a driver of the first truck 131. The first data may include e.g. coordinates and/or velocities (or speeds) of the various trucks, and the first data is provided, once received by the antenna 210, to the device 200 over the signal connection 212. The first data may, in some embodiments, also include e.g. a loading capacity, maximum/optimal speed, or similar, of the respective truck, or e.g. at least an identification of a truck, from which identification such capacities and/or speeds may be obtained from some other source.

The device 200 is also communicatively connected, via e.g. a signal connection 222, to a sender/antenna 220 which may send data indicative of a mitigative action (determined by the device 200, as will be described further below) as part of one or more wireless (e.g. radio and/or optical) signals 224a and 224b to plurality of trucks (including the first truck 131). This may include e.g. sending the mitigative action to the first truck 131 directly via a signal 224a to the truck 131 itself, and/or e.g. sending the mitigative action to the user device 140 of the driver of the first truck 131.

Optionally, the device 200 may also, in some embodiments, be communicatively connected to a first data storage/unit 230 in which various transport cycle details about planned routes, schedules or similar pertinent to the respective transport cycles of the trucks may be stored. This data may be accessed by the device 200 via e.g. a signal connection 232. In some embodiments, this data may also include details about the various trucks, such as their loading capacities, maximal/optimal speeds, or similar, in which case an identification of a particular truck may be used to obtain such details about the particular truck.

Optionally, the device 200 may also, in some embodiments, be communicatively connected to a second data storage/unit 240 in which weather and/or traffic data pertinent to the respective transport cycles (e.g. predicted weather along a scheduled route, predicted traffic information along the scheduled route, or similar) of the trucks. This data may be accessed by the device 200 via e.g. a signal connection 242.

Figure 3A schematically illustrates a flowchart of embodiments of an envisaged method 300 performed by the device 200, while Figure 3B schematically illustrates, in terms of various functional blocks/modules/units, the flow of information within the device 200 while performing the method 300.

A movement module 310 is provided as part of the device 200 and configured to receive, as part of e.g. the signal 212 and as part of a step S301 of the method 300, the first data indicative of movements of the plurality of trucks, including the first truck 131. Optionally, the movement module 310 may also be configured to receive the signal 232, including the transport cycle details described above. If present, the data of the signal 232 may be made to form part of the first data. In other embodiments, the movement module 310 may provide the data from the signals 212 and 232 as separate output signals. In any embodiment, the data is output (e.g. as part of the signal 312) to a forecast module 320. In some embodiments of the device 200, the movement module 310 may not be included and the data 212 (and e.g. the data 232) may then instead be provided directly to the forecast module 320.

A forecasting module 320 is provided as part of the device 200 and configured to receive the first data 312 from the movement module 310 and to, based on the first data and as a step S302, forecast an imminent imbalance of outbound and inbound trucks to a main load site (such as the load site 110). For example, the forecasting module 320 may be configured to calculate a probability that an imbalance will occur during for example a fixed future time interval. Forecasting the imminent imbalance may then correspond to e.g. the calculated probability exceeding a threshold value, or similar. The forecasting module 320 may e.g. take into account current positions of the trucks 130, current speeds of the trucks 130, current directions of driving of the trucks 130, as well as one or more corresponding historical values for such quantities for the trucks 130. The forecasting module 320 may provide, as part of e.g. a signal 322, an indication of the forecasted imminent imbalance. The signal 322 may for example also include part or all of the first data, e.g. positions and/or movements of the various trucks 130, and similar.

A mitigative action module 330 is provided as part of the device 200 and configured to receive the signal 322 and, as part of a step S303, determine (i.e. if the signal 322 indicates that an imbalance is imminent) a mitigative action for at least the first dump truck 131 of the trucks 130, in order to reduce a risk of the imminent imbalance actually occurring. The determined mitigative action is output, e.g. as part of a signal 332, from the mitigative action module 330.

A communication module 340 is provided as part of the device 200 and configured to receive the mitigative action signal 332 from the module 330 and to, as part of a step S304, communicate the mitigative action to at least the first truck 131. As described above with reference to e.g. Figure 2, this may be achieved by the communication module 340 providing the signal 222 to a transmitter/antenna (such as the transmitter/antenna 220).

Optionally, a weather and/or traffic data module 340 may be provided as part of the device 200 and configured to, as part of an optional step S305, receive (as part of e.g. the signal 242 from the storage 240, or from any other entity in possession of weather and/or traffic data) weather and/or traffic data pertinent to at least the transport cycle of the first truck 131. The obtained/received weather and/or traffic data may be provided as second data to the forecasting module 320, as part of e.g. a signal 342. In some embodiments, the module 340 may not be included, and the weather and/or traffic data (i.e. the second data) may then e.g. be provided directly to the forecasting module 320.

In some embodiments of the method 300 and the monitoring device 200, the forecasting module 320 may implement one or more machine learning algorithms, which have been trained to, based on the first data (and optionally also based on the second data) forecast the imminent imbalance. The machine learning algorithm may for example be trained to output a probability of an imbalance being imminent (i.e. occurring within a future, predefined time interval, or similar). If the probability is e.g. determined to be above a certain threshold value, the forecasting module 320 may then output the indication 322 of the imminent imbalance. Such a machine learning algorithm may for example, in some embodiments, be implemented using an artificial neural network, wherein the person skilled in the art is assumed to know the basics of setting up such a network. For example, an input layer including a plurality of input neurons may be provided to receive e.g. the movements (i.e. positions and/or velocities) of the trucks 130, and in some embodiments to also receive e.g. the transport cycle details and/or the second data (i.e. the weather and/or traffic data). The network may include one or more intermediate layers of one or more neurons for processing and propagating the information provided to the input layer, and an output layer connected to the last such intermediate layer and configured to calculate a final output from the network. As mentioned earlier herein, this final input may e.g. be a probability or a binary indication (e.g. "yes" or "no") of the imbalance being imminent. In other embodiments, the output layer may e.g. include several output neurons each providing a probability or binary indication of one or more classes of future forecasts. Examples of such classes may e.g. include that a transport cycle is balanced, imbalanced, or e.g. indefinite. Alternatively, the network may e.g. output (using one or more output neurons) a degree of balance for a transport route, such as e.g. "100% balanced", "75% balanced", ..., "25 % balanced", "0% balanced", or similar, or the opposite for a degree of imbalance instead.

As used herein, that inbound and outbound trucks are "balanced" does not necessarily mean that a number of inbound trucks is equal to a number of outbound trucks. As described earlier herein, determining whether there is balance or not may also include taking into account e.g. loading capacities and/or maximal/optimal speeds of the trucks, and optionally in combination with e.g. a material handling capacity at the main load site. For example, if the main load site 110 has a handling capacity of X tons/hour, a forecasted situation in which two trucks each having X tons of loading capacity arriving within e.g. less than an hour may be considered as an imbalance, as the last of these two trucks will likely have to wait/queue at the main load site before the first of these two trucks are fully loaded, or similar. A suitable mitigative action may then include e.g. instructing the first truck to speed up, and/or instructing the second truck to slow down, such that the two trucks are not expected to both arrive within an hour. As used in this particular example, the "first truck" may e.g. be the truck expected to arrive first at the main load site 110, while the "second truck" may consequently be the truck expected to arrive later than the first truck at the main load site 110. It should also be mentioned that as envisaged herein, a mitigative action may in some situations e.g. include that the first truck reduces its speed or even stops completely (and/or that the second truck increases its speed), in order for the second truck to pass the first truck on its way to the main load site 110. This may, for example, be beneficial if the capacity of the second truck better matches a current available handling capacity and/or need at the main load site 110, or similar. Other examples of mitigative actions are of course also envisaged.

In particular, determining whether there is an imbalance at a particular site may thus include to take into account also the handling capacities etc. of some or all other sites in one or more transport cycles visiting the particular site. Optimizing the movements of the various trucks may e.g. include taking into account a handling capacity at a next site (e.g. 120, 120a, and/or 120b) in a transport cycle after the main load site 110, which may be reflected in the "outbound" part of the balance/imbalance at the main load site 110. In one example, obtaining a balance of inbound and outbound trucks for the main load site 110 may e.g. correspond to a forecasted inflow rate of material (measured in e.g. tons/hour) matching an offloading capacity at the main load site 110, a forecasted inflow rate of load capacity (also measured in e.g. tons/hour, as provided by available loading capacity of the inbound trucks) matching a loading capacity at the main load site 110 (e.g. of an excavator, front loader, or similar, used to load the trucks), and e.g. a forecasted outflow of material (measured in e.g. tons/hour) at the main load site 110 bound for a particular next site in a transport cycle matching an offloading capacity of the particular next site, or similar.

In some embodiments, the definition of balance/imbalance at the main load site 110 may be simplified to include only that the numbers of inbound and outbound trucks at the main load site 110 are equal, or similar, which may be a suitable definition if e.g. all (or most) of the trucks 130 are similar in terms of load capacity, etc.

As envisaged herein, a neural network or similar may be used also to provide the various mitigative actions for the trucks 130. For example, such a network (which may be standalone, or form part of the network used for the forecasting) may be trained to, based on the first data, output one or more suggested changes in speed and/or route for one or more of the trucks 130, including the first truck 131. For example, the network may be trained to, for a particular current situation (i.e. particular current positions and/or velocities of the trucks 130) output one or more mitigative actions which would make the number of inbound and outbound trucks at the main load site 110 more balanced. For example, such an output may e.g. include for one truck to increase its speed with a recommended value, for another truck to reduce its speed with a recommended value, or e.g. for a third truck to stop for a recommended time or even change its planned route for arriving at the main load site (or its planned route for arriving at a next stop after having left the main load site), or similar. In particular, the network may determine that such changes are only necessary for some (or only one) of the trucks 130, and may provide no recommended changes for the other trucks. This may be advantageous in that e.g. only a first set of trucks which are recommended to change their speeds and/or routes may be communicated to/with, and such that a second set of other trucks may avoid being disturbed with information pertinent only for the first set.

A neural network used to determine mitigative actions may for example be provided with data representing a current situation of the trucks, including e.g. one or more of current positions of the trucks, current speeds of the trucks, current distances between trucks travelling along a same route, current/future available load capacity of the trucks, current/future available handling capacity of the main load site and other sites, or similar, and based thereon generate suitable mitigative actions for each truck, where a mitigative action may in this case also include to do nothing, e.g. to proceed without taking further action(s) for a particular truck. The training of the network may be performed in a similar fashion, and may use e.g. reinforcement learning or supervised learning. For example, the network may be provided with a first situation and propose one or more mitigative actions to improve the first situation. The proposed mitigative action(s) may be taken accordingly (i.e. in real life operations or in a simulated environment), leading to an updated, second situation. The network may e.g. be used in combination with the network for forecasting the imminent imbalance. By determining whether the second situation corresponds to a lower or increased risk of an imminent imbalance, the network responsible for determining the mitigative actions may thus be trained to improve itself, using e.g. backpropagation as commonly done in the art of neural networks. Similarly, the network responsible for forecasting the imminent imbalance may also be trained by recurrently being provided with e.g. a first situation, by making a forecast of whether a later, second situation will be imbalanced or not, and learn by comparing the forecast made with the actual outcome, i.e. with the second situation. As used herein, "training" and "learning" corresponds to an updating of at least one weight of at least one neuron used in the various layers of the neural network, as would be known to the skilled person. Other configurations and/or parameters as those listed above may of course also be used to obtain a same or similar functionality, as long as the network(s) may be trained to forecast an imminent imbalance, and to propose one or more mitigative actions suitable to prevent such an imbalance from happening.

As envisaged herein, a "mitigative action" to a particular truck may be communicated as part of e.g. a text message or similar, shown on either a smartphone of a driver associated with the particular truck, or e.g. on a display provided in the particular truck (as part of e.g. a dashboard of the particular truck, or similar). For example, if forecasting that there is an imminent imbalance which, if not attended to, will lead to the situation 102 depicted in Figure 1B, a mitigative action may include for one or more of the trucks 130b-d to reduce their speeds. A text message may e.g. be sent to the truck 130b, instructing the truck 130b to reduce its speed to e.g. Y km/h (or mph) in order to avoid having to queue at the main load site 110, and similar. Likewise, another mitigative action may be to provide a text message to the truck 130h, instructing the truck 130h to increase its speed to e.g. Z km/h (or mph) in order to avoid the handling capacity at the dump site 120 being underused, or similar.

In case of e.g. traffic jam or bad weather conditions, a mitigative action may e.g. include for a particular truck to change its planned route, in order to avoid e.g. queues caused by an accident or similar. A text message may then include e.g. an instruction for a truck to change its route such that the truck passes position Y before arriving at the next site, or similar. Instead of a text message, such a route change may instead, or in addition, be communicated as a plurality of points defining a suggested new route, or similar. Instead of communicating the route itself, the mitigative action may instead include only the waypoints necessary for e.g. a route planner of the truck to on its own calculate the new route, or similar.

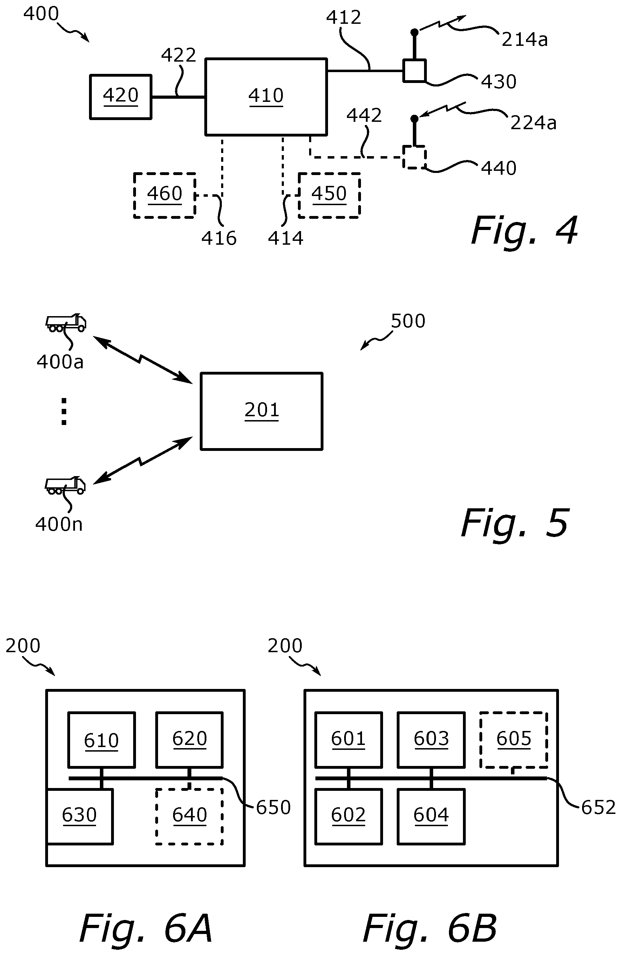

The present disclosure also envisages to provide a dump truck, which will now be described in more detail with reference also to Figure 4.

Figure 4 schematically illustrates for the present disclosure relevant components of a dump truck 400. The truck includes a controller 410 which is configured to, from a positioning device 420 and as part of e.g. a signal 422, receive a current position of the truck 400. The positioning device 420 may e.g. be GPS/GNSS receiver or similar, which may be configured to track a movement of the truck 400 and to provide coordinates and/or speed of the truck 400 as part of the signal 422. The controller 410 is further connected to a transmitter/antenna 430, and the controller 410 is configured to send, based on the information received from the positioning device 420, data including the movement of the truck to the transmitter 430, as part of e.g. a signal 412. The transmitter 430 is in turn configured to recurrently send information, based on the signal 412, indicative of the movement of the truck 400 to a monitoring device (such as the monitoring device 200), e.g. as part of the wireless signal 214a.

Optionally, the truck 400 may also include a receiver/antenna 440, which is configured to receive, as part of a wireless signal 224a, an indication of a mitigative action from the monitoring device, and to communicate this mitigative action to the controller 410 as part of e.g. a signal 442. The truck 400 may include e.g. circuitry 450 configured to display the mitigative action (in response to e.g. a control signal 414 from the controller 410, or similar) to a driver of the truck 400 (where the circuitry 450 is then e.g. a display or other optical device, such as a screen on/off a dashboard of the truck 400 or similar). The truck 400 may also be an autonomous or at least semi-autonomous vehicle, and may then include circuitry 460 configured to (in accordance with a control signal 416 from the controller 410) control a driving of the truck 400 in accordance with the mitigative action. In this case, the circuitry 460 may e.g. be or form part of a control system for such (semi-)autonomous driving of the truck 400. The truck 400 may e.g. be equal or similar to one or more of the trucks 130, and in particular be equal to the first truck 131.

The present disclosure also envisages to provide a fleet for material handling, as will now be described in more detail with reference also to Figure 5.

The fleet 500 includes a plurality of trucks 400a-n, each similar or equal to e.g. the truck 400 described with reference to Figure 4. The fleet 500 further includes a monitoring system 201, i.e. as described earlier herein with reference to Figure 2, wherein the monitoring system 201 includes (not shown) the monitoring device 200, and e.g. at least the receiver/antenna 210 for recurrently receiving movements of the trucks 400a-n, and at least the transmitter/antenna 220 for communicating mitigative actions to the trucks 400a-n.

With reference to Figures 6A and 6B, various embodiments of a monitoring device as envisaged herein will now be described in more detail.

Figure 6A schematically illustrates, in terms of a number of functional units, the components of an embodiment of a monitoring device 200 for transport cycle balancing. The monitoring device 200 includes processing circuitry 610. The processing circuitry 610 is provided using any combination of one or more of a suitable central processing unit (CPU), multiprocessor, microcontroller, digital signal processor (DSP), etc., capable of executing software instructions stored in a computer program product (not shown, but envisaged herein) stored on a (computer-readable) storage medium 620. The processing circuitry 610 may further be provided as at least one application specific integrated circuit (ASIC), or field-programmable gate array (FPGA), or similar.

Particularly, the processing circuitry 610 is configured to cause the monitoring device 200 to perform a set of operations, or steps, such as the steps S301-S304 as disclosed above e.g. when describing the method 300 illustrated in Figure 3A. For example, the storage medium 420 may store a set of operations, and the processing circuitry 610 may be configured to retrieve the set of operations from the storage medium 620 to cause the monitoring device 200 to perform the set of operations. The set of operations may be provided as a set of executable instructions. Thus, the processing circuitry 610 is thereby arranged to execute methods as disclosed herein e.g. with reference to Figure 3A.

The storage medium 620 may also include persistent storage, which, for example, can be a memory in form of any single or combination of magnetic memory, optical memory, solid state memory or even remotely mounted memory. The storage medium 620 may thus provide non-transitory storage, storing computer-readable instructions for the processing circuitry 610.

The monitoring device 200 may further include a communications interface 630 for communications with other entities and objects, in order to e.g. receive/obtain one or more of the signals 212, 232 and 242, and to e.g. output one or more signals such as the signal 222. The interface 630 may also be used to receive other information about e.g. a dump truck in which the device 200 is included as part of. The communication interface 630 may include one or more transmitters and receivers, including analogue and/or digital components, and may utilize e.g. one or more wired and/or wireless connections for this purpose.

The processing circuitry 610 controls the general operation of the monitoring device 200 e.g. by sending data and control signals to the communications interface 630 and the storage medium 620, by receiving data and reports from the communications interface 630, and by retrieving data and instructions from the storage medium 620. The monitoring device 200 may of course optionally also include other components, here illustrated by the dashed box 640. A communication bus 650 is also provided and connects the various modules/units 610, 620, 630, and 640 (if included), such that they may communicate with each other to exchange information.

Figure 4B schematically illustrates, in terms of a number of functional modules 601-604, the components of a monitoring device 200 according to one or more embodiments of the present disclosure. The monitoring device 200 includes at least a receive module 601 configured to perform step S301 of the method 300 described with reference to Figure 3A (and e.g. corresponding to the movement module 310), a forecast module 602 configured to perform step S302 of the method 300 (and e.g. corresponding to the forecasting module 320), a determination module 603 configured to perform step S303 of the method 300 (and e.g. corresponding to the mitigative action module 330), and a communicate module 604 configured to perform step S304 of the method 300 (and e.g. corresponding to the communication module 340). In some embodiments, the monitoring device 200 may of course include also one or more other such functional modules (not shown) if the monitoring device 200 is assigned to perform also one or more other tasks, as illustrated by the dashed box 605.

In general terms, each functional module (such as modules 601-604) may be implemented in hardware or in software. Preferably, one or more or all functional modules may be implemented by the processing circuitry 610, possibly in cooperation with the communications interface 630 and/or the storage medium 620. The processing circuitry 610 may thus be arranged to from the storage medium 620 fetch instructions as provided by a functional module (e.g. 601-604), and to execute these instructions and thereby perform any steps of the method 300 or any other method envisaged herein, performed by the monitoring device 200 as disclosed herein.

The present disclosure also envisages to provide a computer program for transport cycle balancing as described herein. The computer program includes computer code that, when running on a processing circuitry of a monitoring device (such as e.g. the processing circuitry 610 of the monitoring device 200 described with reference to Figures 6A and 6B), causes the monitoring device to perform the various steps of any method (such as e.g. method 300) as described and envisaged herein.

The present disclosure also envisages a computer program product (not shown) in which the above envisaged computer program is stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable. In general, a "data carrier" may be a computer-readable storage medium, such as e.g. the storage medium 620 of the monitoring device 200.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

In summary of the present disclosure, it is provided an improved way of monitoring the movements of trucks performing mass excavation operations, and in particular where the trucks operate according to one or more transport cycles between a main load site and one or more additional sites (such as dump sites and/or additional load sites). In particular, the improved way includes to forecast an imminent imbalance of inbound and outbound trucks for the main load site, and to determine and communicate mitigative, proactive actions which can be taken by (drivers of) the trucks to avoid the forecasted imbalance occurring at all. As a result, unwanted queuing at load and dump sites may be avoided, leading to reduced fuel consumption and an overall reduced negative impact on the environment, while also improving overall productivity.

## Claims

1. A method (300) of transport cycle balancing, the method being performed in processing circuitry (610) of a monitoring device (200), and comprising:
- recurrently receiving (S301; 212) first data indicative of movements of a plurality of dump trucks (130, 400) each operating in accordance with a transport cycle, each transport cycle including a planned hauling of material between a same first site (110) and at least one second site (120);
- forecasting (S302), based on the received first data, that an imbalance of inbound and outbound dump trucks for the first site is to occur within a future, predefined time interval, said imbalance including at least one of: i) a forecasted number of said inbound dump trucks and said outbound dump trucks for the first site being unequal, ii) a forecasted inflow rate of material to the first site not matching an offloading capacity at the first site, iii) a forecasted outflow rate of material from the first site not matching an offloading capacity at the at least one second site, and iv) a forecasted inflow rate of load capacity of the inbound dump trucks to the first site not matching a loading capacity at the first site during the predefined time interval;
- determining (S303), in response to forecasting (S302) said imbalance, a mitigative action for at least a first dump truck (400) of the plurality of dump trucks to reduce a risk of the imbalance occurring, and
- communicating (S304; 222) the mitigative action to the first dump truck.

2. The method according to claim 1, wherein communicating the mitigative action to the first dump truck includes sending a signal (224b) indicative of the mitigative action to a user device (140) associated with a driver of the first dump truck.

3. The method according to claim 2, wherein receiving the first data includes receiving, from the user device, a signal (214b) indicative of movements of the user device.

4. The method according to any one of claims 1 to 3, wherein communicating the mitigative action to the first dump truck includes sending a signal (224a) indicative of the mitigative action to i) a display device (450) of the first dump truck and/or ii) an autonomous or semi-autonomous driving control system (460) of the first dump truck.

5. The method according to any one of the preceding claims, wherein the forecasting of the imbalance is based also on weather and/or traffic information, and wherein the method further includes obtaining (S305; 242) second data including such weather and/or traffic information pertinent to at least the transport cycle of the first dump truck.

6. The method according to any one of the preceding claims, wherein forecasting the imbalance includes using a machine learning algorithm trained to, based on the first data, perform such forecasting.

7. The method according to any one of the preceding claims, wherein the mitigative action for the first dump truck includes at least one of i) an increase or decrease of a speed of the first dump truck, ii) a temporary stopping of the first dump truck, and iii) a change of a planned route for the first dump truck.

8. A monitoring device (200) for transport cycle balancing, the monitoring device comprising processing circuitry (610) configured to cause the monitoring device to:
- recurrently receive (S301; 212) first data indicative of movements of a plurality of dump trucks (130, 400) each operating in accordance with a transport cycle, wherein each transport cycle includes a planned hauling of material between a same first site (110) and at least one second site (120);
- forecast (S302), based on the received first data, that an imbalance of inbound and outbound dump trucks for the first site is to occur within a future, predefined time interval, said imbalance including at least one of: i) a forecasted number of said inbound dump trucks and said outbound dump trucks for the first site being unequal, ii) a forecasted inflow rate of material to the first site not matching an offloading capacity at the first site, iii) a forecasted outflow rate of material from the first site not matching an offloading capacity at the at least one second site, and iv) a forecasted inflow rate of load capacity of the inbound dump trucks to the first site not matching a loading capacity at the first site during the predefined time interval;
- determine (S303), in response to forecasting the imbalance, a mitigative action for at least a first dump truck (400) of the plurality of dump trucks to reduce a risk of the imbalance occurring, and
- communicate (S304) the mitigative action to the first dump truck.

9. The monitoring device according to claim 8, wherein the processing circuitry is further configured to cause the monitoring device to perform a method (300) according to any one of claims 2 to 7.

10. A dump truck (400), comprising:
- a positioning device (420) configured to track a movement of the dump truck,
and
- a wireless transmitter (430) configured to recurrently send information indicative of the movement of the dump truck to a monitoring device (200) according to claim 8 or 9.

11. The dump truck according to claim 10, further comprising a wireless receiver (440) configured to receive a signal (224a) indicative of the mitigative action from the monitoring device, and circuitry (450, 460) configured to i) display the mitigative action to a driver of the dump truck and/or ii) control a driving of the dump truck in accordance with the mitigative action.

12. A fleet (500) for material hauling, comprising:
- a plurality of dump trucks (400a-n) according to claim 10 or 11, and
- a monitoring system (201) including a monitoring device (200) according to claim 8 or 9.

13. A computer program for transport cycle balancing, comprising computer code that, when running on processing circuitry (610) of a monitoring device (200), causes the monitoring device to:
- recurrently receive (S301) first data indicative of movements of a plurality of dump trucks (110, 400) each operating in accordance with a transport cycle, wherein each transport cycle includes a hauling of material between a same first site (110) and at least one second site (120);
- forecast (S302), based on the received first data, that an imbalance of inbound and outbound dump trucks for the first site is to occur within a future, predefined time interval, said imbalance including at least one of: i) a forecasted number of said inbound dump trucks and said outbound dump trucks for the first site being unequal, ii) a forecasted inflow rate of material to the first site not matching an offloading capacity at the first site, iii) a forecasted outflow rate of material from the first site not matching an offloading capacity at the at least one second site, and iv) a forecasted inflow rate of load capacity of the inbound dump trucks to the first site not matching a loading capacity at the first site during the predefined time interval;
- determine (S303), in response to forecasting the imbalance, a mitigative action for at least a first dump truck (400) of the plurality of dump trucks to reduce a risk of the imbalance occurring, and
- communicate (S304) the mitigative action to the first dump truck.

14. The computer program according to claim 13 wherein the computer code is further such that it, when running on the processing circuitry of the monitoring device, causes the monitoring device to perform a method (300) according to any one of claims 2 to 7.

15. A computer program product, comprising a computer-readable storage medium on which a computer program according to claim 13 or 14 is stored.

## Patentansprüche

1. Verfahren (300) zum Ausgleichen von Transportzyklen, wobei das Verfahren in einer Verarbeitungsschaltung (610) einer Überwachungsvorrichtung (200) durchgeführt wird und Folgendes umfasst:
- wiederkehrendes Empfangen (S301; 212) von ersten Daten, die die Bewegungen von mehreren Muldenkippern (130, 400) anzeigen, die jeweils in Übereinstimmung mit einem Transportzyklus arbeiten, wobei jeder Transportzyklus eine geplante Beförderung von Material zwischen einem gleichen ersten Standort (110) und mindestens einem zweiten Standort (120) umfasst;
- Vorhersagen (S302), basierend auf den empfangenen ersten Daten, dass ein Ungleichgewicht von einfahrenden und ausfahrenden Muldenkippern für den ersten Standort innerhalb eines zukünftigen, vordefinierten Zeitintervalls auftreten wird, wobei das Ungleichgewicht mindestens eines der folgenden Merkmale umfasst: i) eine vorhergesagte Anzahl der einfahrenden Muldenkipper und der ausfahrenden Muldenkipper für den ersten Standort, die ungleich sind, ii) eine vorhergesagte Zuflussrate von Material zu dem ersten Standort, die nicht mit einer Entladekapazität an dem ersten Standort übereinstimmt, iii) eine vorhergesagte Abflussrate von Material von dem ersten Standort, die nicht mit einer Entladekapazität an dem mindestens einen zweiten Standort übereinstimmt, und iv) eine vorhergesagte Zuflussrate der Ladekapazität der einfahrenden Muldenkipper zu dem ersten Standort, die nicht mit einer Ladekapazität an dem ersten Standort während des vordefinierten Zeitintervalls übereinstimmt;
- Bestimmen (S303), als Reaktion auf die Vorhersage (S302) des Ungleichgewichts, einer Abhilfemaßnahme für mindestens einen ersten Muldenkipper (400) der Vielzahl von Muldenkippern, um ein Risiko des Auftretens des Ungleichgewichts zu verringern, und
- Übermitteln (S304; 222) der Abhilfemaßnahme an den ersten Muldenkipper.

2. Verfahren nach Anspruch 1, wobei das Übermitteln der Abhilfemaßnahme an den ersten Muldenkipper das Senden eines Signals (224b), das die Abhilfemaßnahme anzeigt, an ein Benutzergerät (140), das einem Fahrer des ersten Muldenkippers zugeordnet ist, umfasst.

3. Verfahren nach Anspruch 2, wobei das Empfangen der ersten Daten das Empfangen eines Signals (214b) von dem Benutzergerät umfasst, das Bewegungen des Benutzergeräts anzeigt.

4. Verfahren nach einem der Ansprüche 1 bis **3,** wobei das Übermitteln der Abhilfemaßnahme an den ersten Muldenkipper das Senden eines Signals (224a), das die Abhilfemaßnahme anzeigt, an i) eine Anzeigevorrichtung (450) des ersten Muldenkippers und/oder ii) ein autonomes oder halbautonomes Fahrsteuerungssystem (460) des ersten Muldenkippers umfasst.

5. Verfahren nach einem der vorhergehenden Ansprüche, wobei die Vorhersage des Ungleichgewichts auch auf Wetter- und/oder Verkehrsinformationen basiert und wobei das Verfahren ferner das Erhalten (S305; 242) von zweiten Daten umfasst, die solche Wetter- und/oder Verkehrsinformationen enthalten, die mindestens für den Transportzyklus des ersten Muldenkippers relevant sind.

6. Verfahren nach einem der vorhergehenden Ansprüche, wobei die Vorhersage des Ungleichgewichts die Verwendung eines maschinellen Lernalgorithmus umfasst, der darauf trainiert ist, auf der Grundlage der ersten Daten eine solche Vorhersage durchzuführen.

7. Verfahren nach einem der vorhergehenden Ansprüche, wobei die Abhilfemaßnahme für den ersten Muldenkipper mindestens eine der folgenden Maßnahmen umfasst: i) eine Erhöhung oder Verringerung der Geschwindigkeit des ersten Muldenkippers, ii) ein vorübergehendes Anhalten des ersten Muldenkippers, und iii) eine Änderung der geplanten Route des ersten Muldenkippers.

8. Überwachungsvorrichtung (200) zum Ausgleichen von Transportzyklen, wobei die Überwachungsvorrichtung eine Verarbeitungsschaltung (610) umfasst, die konfiguriert ist, um die Überwachungsvorrichtung zu veranlassen:
- wiederkehrend erste Daten zu empfangen (S301; 212), die die Bewegungen von mehreren Muldenkippern (130, 400) anzeigen, die jeweils in Übereinstimmung mit einem Transportzyklus arbeiten, wobei jeder Transportzyklus eine geplante Beförderung von Material zwischen einem gleichen ersten Standort (110) und mindestens einem zweiten Standort (120) umfasst;
- basierend auf den empfangenen ersten Daten vorherzusagen (S302), dass ein Ungleichgewicht von einfahrenden und ausfahrenden Muldenkippern für den ersten Standort innerhalb eines zukünftigen, vordefinierten Zeitintervalls auftreten wird, wobei das Ungleichgewicht mindestens eines der folgenden Merkmale umfasst: i) eine vorhergesagte Anzahl der einfahrenden Muldenkipper und der ausfahrenden Muldenkipper für den ersten Standort, die ungleich sind, ii) eine vorhergesagte Zuflussrate von Material zu dem ersten Standort, die nicht mit einer Entladekapazität an dem ersten Standort übereinstimmt, iii) eine vorhergesagte Abflussrate von Material von dem ersten Standort, die nicht mit einer Entladekapazität an dem mindestens einen zweiten Standort übereinstimmt, und iv) eine vorhergesagte Zuflussrate der Ladekapazität der einfahrenden Muldenkipper zu dem ersten Standort, die nicht mit einer Ladekapazität an dem ersten Standort während des vordefinierten Zeitintervalls übereinstimmt;
- als Reaktion auf die Vorhersage des Ungleichgewichts eine Abhilfemaßnahme für mindestens einen ersten Muldenkipper (400) der Vielzahl von Muldenkippern zu bestimmen (S303), um ein Risiko des Auftretens des Ungleichgewichts zu verringern, und
- die Abhilfemaßnahme an den ersten Muldenkipper zu übermitteln (S304).

9. Überwachungsvorrichtung nach Anspruch 8, wobei die Verarbeitungsschaltung ferner konfiguriert ist, um die Überwachungsvorrichtung zu veranlassen, ein Verfahren (300) nach einem der Ansprüche 2 bis 7 durchzuführen.

10. Muldenkipper (400), umfassend:
- eine Positionierungsvorrichtung (420), die konfiguriert ist, um eine Bewegung des Muldenkippers zu verfolgen, und
- einen drahtlosen Sender (430), der konfiguriert ist, um wiederkehrend Informationen, die die Bewegung des Muldenkippers anzeigen, an eine Überwachungsvorrichtung (200) nach Anspruch 8 oder 9 zu senden.

11. Muldenkipper nach Anspruch 10, ferner umfassend einen drahtlosen Empfänger (440), der konfiguriert ist, um ein Signal (224a) zu empfangen, das die Abhilfemaßnahme von der Überwachungsvorrichtung anzeigt, sowie eine Schaltung (450, 460), die konfiguriert ist, um i) die Abhilfemaßnahme einem Fahrer des Muldenkippers anzuzeigen und/oder ii) ein Fahren des Muldenkippers in Übereinstimmung mit der Abhilfemaßnahme zu steuern.

12. Flotte (500) für den Materialtransport, umfassend:
- mehrere Muldenkipper (400a-n) nach Anspruch 10 oder 11, und
- ein Überwachungssystem (201) mit einer Überwachungsvorrichtung (200) nach Anspruch 8 oder 9.

13. Computerprogramm zum Ausgleichen von Transportzyklen, umfassend einen Computercode, der, wenn er auf einer Verarbeitungsschaltung (610) einer Überwachungsvorrichtung (200) ausgeführt wird, die Überwachungsvorrichtung veranlasst:
- wiederkehrend erste Daten zu empfangen (S301), die die Bewegungen von mehreren Muldenkippern (110, 400) anzeigen, die jeweils in Übereinstimmung mit einem Transportzyklus arbeiten, wobei jeder Transportzyklus eine geplante Beförderung von Material zwischen einem gleichen ersten Standort (110) und mindestens einem zweiten Standort (120) umfasst;
- basierend auf den empfangenen ersten Daten vorherzusagen (S302), dass ein Ungleichgewicht von einfahrenden und ausfahrenden Muldenkippern für den ersten Standort innerhalb eines zukünftigen, vordefinierten Zeitintervalls auftreten wird, wobei das Ungleichgewicht mindestens eines der folgenden Merkmale umfasst: i) eine vorhergesagte Anzahl der einfahrenden Muldenkipper und der ausfahrenden Muldenkipper für den ersten Standort, die ungleich sind, ii) eine vorhergesagte Zuflussrate von Material zu dem ersten Standort, die nicht mit einer Entladekapazität an dem ersten Standort übereinstimmt, iii) eine vorhergesagte Abflussrate von Material von dem ersten Standort, die nicht mit einer Entladekapazität an dem mindestens einen zweiten Standort übereinstimmt, und iv) eine vorhergesagte Zuflussrate der Ladekapazität der einfahrenden Muldenkipper zu dem ersten Standort, die nicht mit einer Ladekapazität an dem ersten Standort während des vordefinierten Zeitintervalls übereinstimmt;
- als Reaktion auf die Vorhersage des Ungleichgewichts eine Abhilfemaßnahme für mindestens einen ersten Muldenkipper (400) der Vielzahl von Muldenkippern zu bestimmen (S303), um ein Risiko des Auftretens des Ungleichgewichts zu verringern, und
- die Abhilfemaßnahme an den ersten Muldenkipper zu übermitteln (S304).

14. Computerprogramm nach Anspruch 13, wobei der Computercode ferner so beschaffen ist, dass er, wenn er in der Verarbeitungsschaltung der Überwachungsvorrichtung läuft, die Überwachungsvorrichtung veranlasst, ein Verfahren (300) nach einem der Ansprüche 2 bis 7 durchzuführen.

15. Computerprogrammprodukt, umfassend ein computerlesbares Speichermedium, auf dem ein Computerprogramm nach Anspruch 13 oder 14 gespeichert ist.

## Revendications

1. Procédé (300) d'équilibrage de cycles de transport, le procédé étant mis en œuvre dans des circuits de traitement (610) d'un dispositif de surveillance (200), et comprenant :
- la réception récurrente (S301 ; 212) de premières données indiquant des déplacements d'une pluralité de camions-benne (130, 400) fonctionnant respectivement conformément à un cycle de transport, chaque cycle de transport incluant un camionnage planifié de matériaux entre un même premier site (110) et au moins un deuxième site (120) ;
- la prévision (S302), sur la base des premières données reçues, qu'un déséquilibre de camions-benne entrants et sortants pour le premier site va se produire dans un intervalle de temps prédéfini à venir, ledit déséquilibre incluant au moins l'un parmi : i) un nombre prévu desdits camions-benne entrants et desdits camions-benne sortants pour le premier site est inégal, ii) un débit entrant prévu de matériaux vers le premier site ne correspond pas à une capacité de déchargement sur le premier site, iii) un débit sortant prévu de matériaux à partir du premier site ne correspond pas à une capacité de déchargement sur l'au moins un deuxième site, et iv) un débit entrant prévu de la capacité de charge des camions-benne entrants vers le premier site ne correspond pas à une capacité de charge sur le premier site pendant l'intervalle de temps prédéfini ;
- la détermination (S303), en réponse à la prévision (S302) dudit déséquilibre, d'une mesure d'atténuation pour au moins un premier camion-benne (400) parmi la pluralité de camions-benne pour réduire un risque de survenance de déséquilibre, et
- la communication (S304 ; 222) de la mesure d'atténuation au premier camion-benne.

2. Procédé selon la revendication 1, dans lequel la communication de la mesure d'atténuation au premier camion-benne inclut l'envoi d'un signal (224b) indiquant la mesure d'atténuation à un dispositif utilisateur (140) associé à un conducteur du premier camion-benne.

3. Procédé selon la revendication 2, dans lequel la réception des premières données inclut la réception, en provenance du dispositif utilisateur, d'un signal (214b) indiquant des déplacements du dispositif utilisateur.

4. Procédé selon l'une quelconque des revendications 1 à 3, dans lequel la communication de la mesure d'atténuation au premier camion-benne inclut l'envoi d'un signal (224a) indiquant la mesure d'atténuation i) à un dispositif d'affichage (450) du premier camion-benne et/ou ii) à un système de commande de conduite autonome ou semi-autonome (460) du premier camion-benne.

5. Procédé selon l'une quelconque des revendications précédentes, dans lequel la prévision du déséquilibre est basée également sur la météo et/ou des informations de trafic, et dans lequel le procédé inclut en outre l'obtention (S305 ; 242) de deuxièmes données incluant une telle météo et/ou de telles informations de trafic relatives au moins au cycle de transport du premier camion-benne.

6. Procédé selon l'une quelconque des revendications précédentes, dans lequel la prédiction du déséquilibre inclut l'utilisation d'un algorithme d'apprentissage machine pour effectuer une telle prédiction, sur la base des premières données.

7. Procédé selon l'une quelconque des revendications précédentes, dans lequel la mesure d'atténuation pour le premier camion-benne inclut l'une au moins parmi i) une augmentation ou un diminution d'une vitesse du premier camion-benne, ii) un arrêt temporaire du premier camion-benne, et iii) une modification d'un itinéraire planifié pour le premier camion-benne.

8. Dispositif de surveillance (200) pour l'équilibrage d'un cycle de transport, le dispositif de surveillance comprenant un circuit de traitement (610) configuré pour amener le dispositif de surveillance à :
- recevoir de façon récurrente (S301 ; 212) des premières données indiquant des déplacements d'une pluralité de camions-benne (130, 400) fonctionnant respectivement conformément à un cycle de transport, dans lequel chaque cycle de transport inclut un camionnage planifié de matériaux entre un même premier site (110) et au moins un deuxième site (120) ;
- prévoir (S302), sur la base des premières données reçues, qu'un déséquilibre de camions-benne entrants et sortants pour le premier site va se produire dans un intervalle de temps prédéfini à venir, ledit déséquilibre incluant au moins l'un parmi : i) un nombre prévu desdits camions-benne entrants et desdits camions-benne sortants pour le premier site est inégal, ii) un débit entrant prévu de matériaux vers le premier site ne correspond pas à une capacité de déchargement sur le premier site, iii) un débit sortant prévu de matériaux à partir du premier site ne correspond pas à une capacité de déchargement sur l'au moins un deuxième site, et iv) un débit entrant prévu de la capacité de charge des camions-benne entrants vers le premier site ne correspond pas à une capacité de charge sur le premier site pendant l'intervalle de temps prédéfini ;
- déterminer (S303), en réponse à la prévision dudit déséquilibre, une mesure d'atténuation pour au moins un premier camion-benne (400) parmi la pluralité de camions-benne pour réduire un risque de survenance de déséquilibre, et
- communiquer (S304) la mesure d'atténuation au premier camion-benne.

9. Dispositif de surveillance selon la revendication 8, dans lequel le circuit de traitement est en outre configuré pour amener le dispositif de surveillance à mettre en œuvre un procédé (300) selon l'une quelconque des revendications 2 à 7.

10. Camion-benne (400), comprenant :
- un dispositif de positionnement (420) configuré pour suivre un déplacement du camion-benne, et
- un émetteur sans fil (430) configuré pour envoyer de façon récurrente des informations indiquant le déplacement du camion-benne au dispositif de surveillance (200) selon la revendication 8 ou 9.

11. Camion-benne selon la revendication 10, comprenant en outre un récepteur (440) configuré pour recevoir un signal (224a) indiquant la mesure d'atténuation à partir du dispositif de surveillance, et un circuit (450, 460) configuré pour i) afficher la mesure d'atténuation à un conducteur du camion-benne et/ou ii) commander une conduite du camion-benne conformément à la mesure d'atténuation.

12. Parc (500) pour le camionnage de matériaux, comprenant :
- une pluralité de camions-benne (400a-n) selon la revendication 10 ou 11, et
- un système de surveillance (201) incluant un dispositif de surveillance (200) selon la revendication 8 ou 9.

13. Programme informatique pour l'équilibrage d'un cycle de transport, comprenant un code informatique amenant le dispositif de surveillance à effectuer les actions suivantes, lorsqu'il est exécuté sur un circuit de traitement (610) d'un dispositif de surveillance (200) :
- réception récurrente (S301) de premières données indiquant des déplacements d'une pluralité de camions-benne (110, 400) fonctionnant respectivement conformément à un cycle de transport, dans lequel chaque cycle de transport inclut un camionnage planifié de matériaux entre un même premier site (110) et au moins un deuxième site (120) ;
- prévision (S302), sur la base des premières données reçues, qu'un déséquilibre de camions-benne entrants et sortants pour le premier site va se produire dans un intervalle de temps prédéfini à venir, ledit déséquilibre incluant au moins l'un parmi : i) un nombre prévu desdits camions-benne entrants et desdits camions-benne sortants pour le premier site est inégal, ii) un débit entrant prévu de matériaux vers le premier site ne correspond pas à une capacité de déchargement sur le premier site, iii) un débit sortant prévu de matériaux à partir du premier site ne correspond pas à une capacité de déchargement sur l'au moins un deuxième site, et iv) un débit entrant prévu de la capacité de charge des camions-benne entrants vers le premier site ne correspond pas à une capacité de charge sur le premier site pendant l'intervalle de temps prédéfini ;
- détermination (S303), en réponse à la prévision du déséquilibre, d'une mesure d'atténuation pour au moins un premier camion-benne (400) parmi la pluralité de camions-benne pour réduire un risque de survenance de déséquilibre, et
- communication (S304) de la mesure d'atténuation au premier camion-benne.

14. Programme informatique selon la revendication 13, dans lequel le code informatique est en outre conçu de manière à amener le dispositif de surveillance à mettre en œuvre un procédé (300) selon l'une quelconque des revendications 2 à 7 lorsqu'il est exécuté sur le circuit de traitement du dispositif de surveillance.

15. Produit de programme informatique, comprenant un support de stockage lisible par ordinateur, sur lequel est stocké un programme informatique selon la revendication 13 ou 14.
